# EUROPEAN PATENT SPECIFICATION

(11) **EP 3 395 563 B1**
(45) Date of publication and mention of the grant of the patent: **29.01.2020**
(21) Application number: 17460027.0
(22) Date of filing: 28.04.2017
(51) Int. Cl.: B32B 13/14, B32B 5/30, B32B 19/06, B32B 5/02, B32B 7/04, B32B 7/08, B32B 27/06, B32B 27/08, B32B 27/12, E02D 17/20

(54) **MULTILAYER SYNTHETIC-MINERAL PROTECTIVE-LEVELLING AND/OR SEALING LINING**
MEHRSCHICHTIGE SCHUTZNIVELLIERUNG AUS SYNTHETISCHEN MINERALIEN UND/ODER ABDICHTUNGSAUSKLEIDUNG
NIVELLEMENT DE PROTECTION ET/OU GARNITURE D'ÉTANCHÉITÉ DE MINÉRAL SYNTHÉTIQUE MULTICOUCHE

(43) Date of publication of application: 31.10.2018
(73) Proprietor: GDA SPÓLKA Z OGRANICZONA ODPOWIEDZIALNOSCIA, 80-298 Gdansk (PL)
(72) Inventor: Kubicka, Grazyna, 07-306 Brok (PL)
(74) Representative: Pomianek, Grazyna

(56) References cited:
- GB-A- 717 109
- US-A- 5 041 330
- US-A1- 2015 352 804

## Description

The invention relates to a multilayer synthetic-mineral protective-levelling and/or sealing lining used in construction, particularly for protecting slopes from erosion, levelling and hardening of subsoils for all types of works and materials, and/or as a seal impervious to liquid in various types of facilities.

Patent document US 8,287,982 B2 discloses a spacer fabric with a tightly knitted bottom layer, very loosely knitted top layer and pile yarns running through the space between the top and bottom layer. A hardening material, particularly powder containing cement, is introduced into the space between the top and bottom external layer, and it may be hardened by adding a liquid. Before hardening, the fabric is flexible and may be shaped; however, after hardening of the material in the fabric's space, the fabric becomes rigid and may be used as a structural component in many situations. Additionally, the fabric may be protected with a sealant on the side with larger pores, while the other side with smaller pores allows for penetration of the liquid to harden the material.

Patent document US 2015/352804 A1 discloses a flexible cementitious composite capable of becoming rigid or semi-rigid which comprising a high loft non-woven layer having a first face and a second face, the second face separated from the first face by a space, wherein the high loft non-woven layer comprises bulking fibers and a binding material, wherein at least a portion of the bulking fibers are connected to other bulking fibers within the high loft non-woven layer through the binding material, wherein a midpoint between the first face and the second face of the high loft non-woven layer defines a midpoint plane, wherein at least about 50% by number of bulking fibers crossing the midpoint plane form a tangential line at the midpoint plane of between about 45 degrees and 90 degrees; a settable powder located in the high loft non-woven layer, wherein the settable powder is capable of setting to a rigid or semi-rigid solid on the addition of a liquid; and a filter layer on the first face of the high loft non-woven layer, wherein the filter layer comprises projections which project at least partially into the high loft non-woven layer, and wherein the filter layer comprises pores that are sufficiently small as to retain at least a portion of the settable powder within the high loft non-woven layer but allow the passage of the liquid; and, a liquid barrier layer on the second face of the high loft non-woven layer, wherein the liquid barrier layer has a coefficient of water permeability of less than about 1×10<-8>m/s.

Patent document US 5 041 330 A discloses a water and/or oil-impermeable sealing mat which is provided in form of a bentonite non-woven fabric combination with the possibility of transmitting thrust from one batt layer to the other, i.e. on a slope thrust forces can be transmitted by the covering batt material through the layer of swellable clay into the supporting batt material. Such a sealing mat is a fiber-reinforced mineral seal permitting the transmission of thrust forces on slopes, without the risk of the layer of swellable clay itself becoming the preferred sliding plane. The sealing mat consists of a non-woven textile material as substrate layer, a layer of swellable clay, preferably sodium bentonite, and a cover layer consisting preferably also of a non-woven textile material, all three layers having been needled together in the conventional manner in a needle loom. When moistened, the clay swells and forms the water and/or oi impermeable layer.
The purpose of the invention is to develop a lining which protects covered surfaces from erosion, having the form of a rigid cover which may be wound up into a roll before stiffening.

A multilayer synthetic-mineral protective-levelling and/or sealing lining comprising a bottom layer made of a synthetic material, a top layer made of a synthetic material, and powdered cement, according to the invention is characterised in that the bottom layer is a base layer made of a synthetic woven or unwoven fabric, while the top layer is made of a synthetic unwoven fabric, and spread on the bottom layer is at least one intermediate layer between the said layers comprising a mineral material, wherein the said at least one intermediate layer comprises powdered cement, and said at least one intermediate layer comprises a swellable mineral material, preferably sodium bentonite, with a separating base layer placed between the intermediate layers, made of a synthetic woven or unwoven fabric, wherein the intermediate layer (3b) comprising a swellable mineral material is placed between the bottom base layer (1) and the separating base layer (4) while the intermediate layer (3a) comprising powdered cement is placed between the separating base layer (4) and the top layer (2), and the bottom base layer being connected with the top layer by stitches made over the entire surfaces of the said layers, providing a mutual pressing of all lining layers.
Additionally, a layer of an impermeable plastic is affixed to the external surface of the bottom base layer, preferably thermally affixed, which is preferably constituted by a double-layer polymer film with a thickness ≥ 0.15 mm, with layers preferably having different melting temperatures, the film layer adjacent to the bottom base layer having a lower melting temperature than the other film layer.
Preferably, the surface weight of the unwoven or woven fabric, from which the bottom and separating base layers arc made, is 80 g/m² to 300 g/m². Preferably, the surface weight of the unwoven fabric, from which the top layer is made, is more than 100 g/m².

The multilayer lining according to the invention has physicochemical and strength parameters sufficient to consider it a proper material for use on covered objects in locations requiring fast and resistant protective cover in a permanent manner after its hydration. The lining according to the invention completely or partially replaces the lean concrete layer required in the preparation of subsoils for the facilities being built. It also enables replacement of the troublesome covering by conventional methods of concreting tank interiors, channels and ditches or lining them with concrete slabs. An additional intermediate layer in the form of bentonite actively protects the coating from leaks, ensuring the lining's impermeability and filling possible cracks formed in the main concrete layer obtained from the cement used in the intermediate layer with bentonite gel. The layer applied in the form of a plastic film additionally protects the lining from leaks, and the two intermediate layers located above (the bentonite layer and the concrete layer) provide protection from mechanical damage to the film.

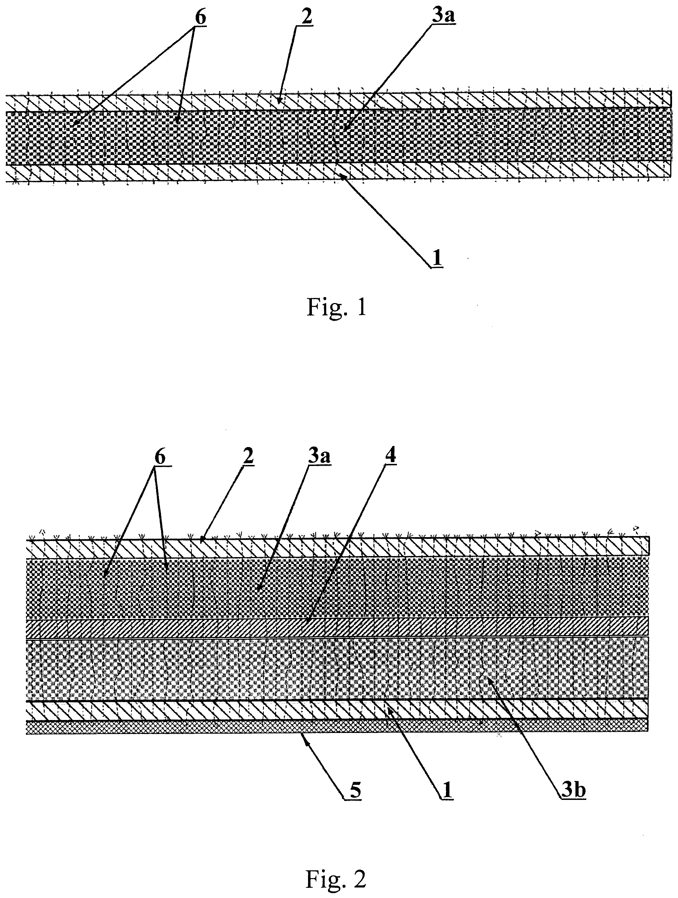

Further benefits and advantages of the present invention will become apparent after a careful reading of the detailed description with appropriate reference to the accompanying drawings in which Fig.1 and Fig.2 show a cross section of the multilayer synthetic-mineral protective-levelling and/or sealing lining.

In one embodiment of the invention presenting on Fig.1, a multilayer synthetic-mineral protective-levelling and/or sealing lining comprises a bottom base layer 1 made of a synthetic woven or unwoven fabric and a top layer 2 made of a weakly stitched synthetic unwoven fabric. Between these layers, one intermediate layer 3a comprising powdered rapid-hardening cement after being infused with a proper amount of water or liquid, is located. The bottom base layer 1 is connected mechanically with the top layer 2 by stitches 6 made over the entire surfaces of the said layers, providing a mutual pressing of all lining layers and pulling the fibres of the top layer 2 beyond the external surface of the bottom base layer 1.

In the second embodiment of the invention presenting on Fig.2, the lining described in the first embodiment comprises a second intermediate layer 3b containing powdered sodium bentonite. Between the intermediate layer 3a comprising powdered cement and the intermediate layer 3b comprising sodium bentonite, there is a separating base layer 4, made of a synthetic woven or unwoven fabric, the layer 3b of powdered sodium bentonite being placed between the bottom base layer 1 and the separating base layer 4, and the intermediate layer 3a comprising powdered cement being placed between the separating base layer 4 and the top layer 2. Additionally, a layer 5 in the form of a double low-melting polymer film with a thickness ≥ 0.20 mm, constituting an additional impermeable layer of the lining, is affixed thermally to the fibres of the top layer 2 pulled-through beyond the external surface of the bottom base layer 1 and over the entire external surface of the bottom base layer 1. The layers of the double polymer film have different melting temperatures, the film layer adjacent to the bottom base layer 1 having a lower melting temperature than the other film layer.

In both of the abovementioned cases, the surface weight of the unwoven or woven fabric, from which the base layers 1, 4 are made, is 80 g/m² to 300 g/m², and the surface weight of the unwoven fabric, from which the top layer 2 is made, is 100 g/m² to 300 g/m².
The specific surface of the powdered cement of the intermediate layer is higher than 5,000 g/cm².
Moreover, the powdered cement of the intermediate layer is characterised preferably by the following mechanical properties: (mean values) a compressive strength of >20 MPa after 8 h, >40 MPa after 24 h, and the following physical properties (mean values): an initial setting time ≈14 min, a final setting time of ≈23 min, a constancy of volume of ≈0 mm, and the sodium bentonite of the intermediate layer preferably is characterised by the following parameters: a free swell index of ≥24 ml/2g; a liquid phase return of ≤18 ml; a montmorillonite content of ≥80%.

Preparation of the multilayer lining consists in a sequential placement of the layers one over another, starting from the bottom base layer 1, and then stitching all layers over the entire surface by needling. After stitching, an additional layer 5 is affixed in the form of a double impermeable plastic film, particularly polymer film, in a process comprising heating and pressing the film to the surface being connected with it.

Before being infused with water and hardening, the lining may be rolled and delivered to the place of use in the form of a roll, and then unrolled, fitting it to the object or ground surface being covered. Next, the lining may be infused with water.
Hardening of the lining is being obtained by infusing it with a proper amount of water or other liquid, which causes the setting process of the cement in the intermediate layer.
After being infused with water or other liquid, the lining forms a solid concrete crust.

## Claims

1. A multilayer synthetic-mineral protective-levelling and/or sealing lining comprising a bottom layer made of a synthetic material, a top layer made of a synthetic material, and powdered cement, **characterised in that** the bottom layer is a base layer (1) made of a synthetic woven or unwoven fabric, while the top layer (2) is made of a synthetic unwoven fabric, and at least one intermediate layer between the said layers, comprising a mineral material, wherein the said at least one intermediate layer (3a) comprises powdered cement, and at least one intermediate layer (3b) comprises a swellable mineral material, with a separating base layer (4) placed between the intermediate layers, made of a synthetic woven or unwoven fabric, wherein the intermediate layer (3b) comprising a swellable mineral material is placed between the bottom base layer (1) and the separating base layer (4) while the intermediate layer (3a) comprising powdered cement is placed between the separating base layer (4) and the top layer (2), and the bottom base layer (1) is connected with the top layer (2) by stitches (6) made over the entire surfaces of the said layers, providing a mutual pressing of all lining layers.

2. The lining according to claim 1, **characterised in that** the intermediate layer (3b) comprises powdered sodium bentonite as the swellable mineral material.

3. The lining according to each of the claims 1 to 10, **characterised in that** a layer (5) of an impermeable plastic is affixed to the external surface of the bottom base layer (1).

4. The lining according to claim 3, **characterised in that** the layer (5) of an impermeable plastic is thermally connected with the bottom base layer (1).

5. The lining according to claim 3 or 4, **characterised in that** the layer (5) of an impermeable plastic is constituted by a double-layer polymer film with a thickness of ≥ 0.15 mm.

6. The lining according to claim 5, **characterised in that** the layers of the double polymer film have different melting temperatures, the film layer adjacent to the bottom base layer (1) having a lower melting temperature than the other film layer.

7. The lining according to claim 1, **characterised in that** the surface weight of the unwoven or woven fabric, from which the base layers (1, 4) are made, is 80 g/m² to 300 g/m².

8. The lining according to claim 1, **characterised in that** the surface weight of the unwoven fabric, from which the top layer (2) is made, is more than 100 g/m².

## Patentansprüche

1. Mehrschichtige Schutznivellierung aus synthetischen Mineralien und/oder Abdichtungsauskleidung mit einer unteren Schicht aus Kunststoff, mit einer oberen Schicht aus Kunststoff und aus pulverisiertem Zement, **dadurch gekennzeichnet, dass** die untere Schicht eine Tragschicht (1) ist, die aus einem synthetischen Gewebe oder Vlies ausgeführt ist und die Deckschicht (2) aus einem synthetischen Vlies ausgeführt ist und zwischen diesen beiden genannten Schichten mindestens eine mineralstoffhaltige Zwischenschicht liegt, wobei mindestens eine der oben genannten Zwischenschichten (3a) pulverisierten Zement enthält, und mindestens eine Zwischenschicht (3b) ein quellfähiges mineralisches Material enthält und zwischen diesen Zwischenschichten eine trennende Tragschicht (4) aus Gewebe oder aus Vlieskunststoff liegt, wobei die Zwischenschicht (3b), die den quellfähigen Mineralstoff enthält, zwischen der unteren Tragschicht (1) und der trennenden Tragschicht (4) angeordnet ist, und die Zwischenschicht (3a), die pulverisierten Zement enthält, zwischen der trennenden Tragschicht (4) und der Deckschicht (2) angeordnet ist, wobei die untere Tragschicht (1) mit der Deckschicht (2) durch Nähte (6) auf der gesamten Fläche der genannten Schichten verbunden ist, wodurch alle Schichten der Auskleidung miteinander verpresst sind.

2. Auskleidung nach dem Anspruch 1, **dadurch gekennzeichnet, dass** die Zwischenschicht (3b) als ein quellfähiger Mineralstoff pulverisiertes Natrium-Bentonit enthält.

3. Auskleidung nach jedem der Ansprüche 1 bis 10, **dadurch gekennzeichnet, dass** eine Schicht (5) aus undurchlässigem Kunststoff an die Außenfläche der unteren Tragschicht (1) angebracht ist.

4. Auskleidung nach dem Anspruch 3, **dadurch gekennzeichnet, dass** die Schicht (5) aus undurchlässigem Kunststoff mit der unteren Tragschicht (1) thermisch verbunden ist.

5. Auskleidung nach dem Anspruch 3 oder 4, **dadurch gekennzeichnet, dass** die Schicht (5) aus undurchlässigem Kunststoff als eine zweischichtige Polymer-Folie mit Stärke ≥ 0, 15mm herausgebildet ist.

6. Auskleidung nach dem Anspruch 5, **dadurch gekennzeichnet, dass** die Schichten der zweischichtigen Polymer-Folie unterschiedliche Schmelztemperaturen aufweisen, wobei die Folienschicht, die an der unteren Tragschicht (1) haftet, eine niedrigere Schmelztemperatur als die zweite Folienschicht aufweist.

7. Auskleidung nach dem Anspruch 1, **dadurch gekennzeichnet, dass** das Flächengewicht des Vlieses oder des Gewebes, aus dem die Tragschichten (1, 4) ausgeführt sind, zwischen 80 g/m² und 300 g/m² liegt.

8. Auskleidung nach dem Anspruch 1, **dadurch gekennzeichnet, dass** das Flächengewicht des Vlieses, aus dem die Deckschicht (2) ausgeführt ist, höher als 100 g/m² ist.

## Revendications

1. Nivellement de protection et/ou garniture d'étanchéité de minéral synthétique multicouche contenant une couche inférieure en matière synthétique, une couche supérieure en matière synthétique, et du ciment en poudre, **caractérisée en ce que** la couche inférieure est la couche de support (1) en tissu synthétique ou en tissu non-tissé synthétique, la couche supérieure (2) est en tissu non-tissé synthétique, et au moins une couche intermédiaire contenant un matériau minéral est située entre lesdites couches, au moins une dite couche intermédiaire (3a) comprenant du ciment en poudre et au moins une couche intermédiaire (3b) comprenant un matériau minéral gonflable, une couche de support (4) de séparation en tissu synthétique ou en tissu non-tissé synthétique est située entre les couches intermédiaires, la couche intermédiaire (3b) contenant le matériau minéral gonflable étant située entre la couche de support inférieure (1) et la couche de support de séparation (4), tandis que la couche intermédiaire (3a) contenant du ciment en poudre étant située entre la couche de support (4) de séparation et la couche supérieure (2), la couche de support inférieure (1) étant reliée à la couche supérieure (2) par une couture (6) réalisée sur toutes les surfaces desdites couches et assurant la compression de toutes les couches de la doublure contre les autres.

2. Garniture selon la revendication 1, **caractérisée en ce que** la couche intermédiaire (3b) contient de la bentonite de sodium en poudre en tant que matériau minéral gonflant.

3. Garniture selon chacune des revendications 1 à 10, **caractérisée en ce que** la couche (5) en matière plastique imperméable est fixée à la surface extérieure de la couche de support inférieure (1).

4. Garniture selon la revendication 3, **caractérisée en ce que** la couche (5) en matière plastique imperméable est reliée thermiquement avec la couche de support inférieure (1).

5. Garniture selon la revendication 3 ou 4, **caractérisée en ce qu'**un film polymère à double couche d'une épaisseur ≥ 0,15 mm constitue une couche (5) en matière plastique imperméable.

6. Garniture selon la revendication 5, **caractérisée en ce que** les couches de film polymère à double couche ont des points de fusion différents, la couche adjacente à la couche de support inférieure (1) ayant un point de fusion inférieur à celui de la seconde couche.

7. Garniture selon la revendication 1, **caractérisée en ce que** la masse surfacique du tissu non-tissé ou du tissu à partir duquel les couches de support (1, 4) sont réalisées, est comprise entre 80 g/m² et 300 g/m².

8. Garniture selon la revendication 1, **caractérisée en ce que** la masse surfacique du tissu non-tissé à partir duquel la couche de surface (2) est réalisée, est supérieure à 100 g/m².
